# EUROPEAN PATENT APPLICATION

(11) **EP 4 744 474 A1**
(43) Date of publication of application: **20.05.2026**
(21) Application number: 25211348.5
(22) Date of filing: 27.10.2025
(51) Int. Cl.: A01D 46/26

(54) **REINFORCEMENT FOR THE RODS OF AN OLIVE HARVESTER**

(30) Priority: 19.11.2024 IT 202400004833 U
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

A reinforcement (10) for the rods (1) of an olive harvester, which includes:
- a plurality of substantially parallel annular elements (11),
- a base element (12), from which the annular elements (11) extend, the base element (12) forming a plurality of bridge elements (13), each of the bridge elements (13) connecting two successive annular elements (11);
at least one of the bridge elements (13) has a substantially V-shaped profile.

## Description

The present invention relates to a reinforcement for the rods of an olive harvester.

In agriculture, beating is a historically known operation that causes certain types of fruit, such as for example olives, walnuts, and/or chestnuts, to fall from trees.

It consists in shaking, and possibly beating, the branches of trees with long poles so as to cause the ripe fruit to fall to the ground.

A more modern and less damaging technique than manual beating, which disadvantageously can damage the plants, is to use olive harvesters, i.e., electric (or even pneumatic) tools provided with extendable poles that cause the fruit to fall onto collection nets by means of the rapid vibration of combs that are inserted between the branches.

Currently, several types of olive harvester are known; in general, known devices comprise one or two comb-shaped oscillating sectors provided with rods at the end of a box-like body associated with an elongated handle.

The oscillation of said sectors causes the consequent movement of the rods, which entails a shaking of the branches and the fall of the fruit (for example, olives).

Normally, the rods are made of carbon fiber and are fixed to the oscillating sector.

To prevent the rods from breaking due to shearing/bending and/or breaking at the base, it is common to use a reinforcement placed adjacent to the oscillating sector.

Such reinforcement, made of plastic, has a plurality of substantially parallel annular elements, each for the insertion of a corresponding tubular supporting element for a corresponding rod.

The annular elements all extend from a same substantially flat base element, which forms a plurality of bridge elements, each between two successive annular elements.

This background art has some aspects that can be improved.

In fact, the bridge elements are generally straight and rigid, which hinders or otherwise limits the oscillation of the rods, which is therefore minimal.

Moreover, reinforcements of the known type allow a reduced insertion/accommodation of the tubular elements in the annular ones since, due to mold construction limitations, the latter are all substantially parallel, but must adapt to the rods, which are however inclined at various angles.

The aim of the present invention is to provide a reinforcement for the rods of an olive harvester that is capable of improving the background art in one or more of the aspects indicated above.

Within this aim, an object of the invention is to provide a reinforcement for the rods of an olive harvester that allows them to oscillate/move more than similar reinforcements of the known type.

Another object of the invention is to provide a reinforcement for the rods of an olive harvester that allows greater insertion/accommodation of the tubular elements in the annular ones with respect to similar reinforcements of the known type.

A further object of the present invention is to overcome the drawbacks of the background art in a manner that is alternative to any existing solutions.

Not least object of the invention is to provide a reinforcement for the rods of an olive harvester that is highly reliable, relatively easy to provide, and at competitive costs.

This aim, as well as these and other objects that will become better apparent hereinafter, are achieved by a reinforcement for the rods of an olive harvester, comprising:
- a plurality of substantially parallel annular elements,
- a base element, from which said annular elements extend, said base element forming a plurality of bridge elements, each of said bridge elements connecting two successive annular elements,
said reinforcement being characterized in that at least one of said bridge elements has a substantially V-shaped profile.

Further characteristics and advantages of the invention will become better apparent from the description of a preferred but not exclusive embodiment of the reinforcement for the rods of an olive harvester according to the invention, illustrated by way of non-limiting example in the accompanying drawings, wherein:
Figure 1 is a view of an application of use of a reinforcement for the rods of an olive harvester according to the invention;
Figures 2a and 2b are, respectively, a perspective view and a front view of a reinforcement for the rods of an olive harvester, according to the invention;
Figure 3 is a top view of the reinforcement for the rods of an olive harvester of Figures 2a and 2b.

With reference to the figures, a reinforcement for the rods of an olive harvester, according to the invention, is generally designated by the reference numeral 10.

The reinforcement 10 is made of plastic material, such as, for example, plastic-coated nylon, and is applied to the rods 1, which are fixed to an oscillating sector 2 of an olive harvester, not shown in the figures.

The reinforcement 10 comprises:
- a plurality of substantially parallel annular elements 11,
- a base element 12, from which the annular elements 11 extend, said base element 12 in turn forming a plurality of bridge elements 13, each for connecting two successive annular elements 11.

One of the particularities of the invention resides in that at least one of the bridge elements 13 has a substantially V-shaped profile.

Advantageously, all the bridge elements 13 have a substantially V-shaped profile.

In particular, the bridge elements 13 have a substantially V-shaped profile substantially arranged on a plane which is coplanar with the axes X1, X2, of extension of the respective annular elements 11.

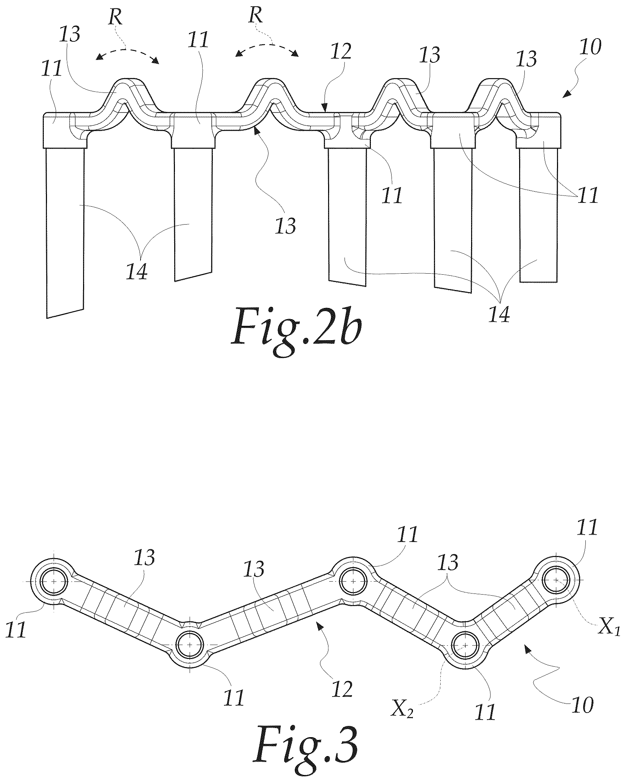

With particular reference to Figure 3, the base element 12 has a zigzag longitudinal extension, with the bridge elements 13 arranged along a succession of individual segments in which each of these segments is gradually inclined with respect to the previous segment.

Respective tubular elements 14 are inserted in said annular elements 11 for the insertion/accommodation of corresponding rods 1.

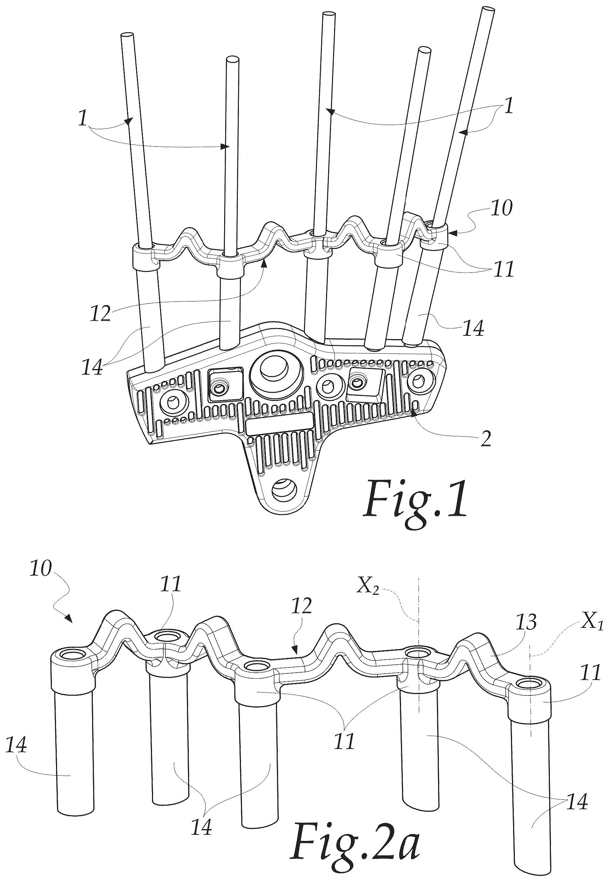

It should be noted that such a shape of the reinforcement 10 with bridge elements 13 having a substantially V-shaped profile allows greater oscillation of the rods 1 with respect to similar reinforcements of the known type, allowing greater elastic flexing of the reinforcement 10 in the directions indicated by the arrows R in Figure 2b.

Moreover, this greater flexibility of the reinforcement 10 due to the bridge elements 13 allows greater insertion/accommodation of the tubular elements 14 in the annular elements 11 with respect to similar reinforcements of the known type.

In practice it has been found that the invention achieves its intended aim and objects, providing a reinforcement for the rods of an olive harvester that allows them to oscillate/move more than similar reinforcements of the known type.

Furthermore, the invention provides a reinforcement for the rods of an olive harvester that allows greater insertion/accommodation of the tubular elements in the annular ones with respect to similar reinforcements of the known type.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Utility Model Application No. 202024000004833 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reinforcement (10) for the rods (1) of an olive harvester, comprising:
- a plurality of substantially parallel annular elements (11),
- a base element (12), from which said annular elements (11) extend, said base element (12) forming a plurality of bridge elements (13), each of said bridge elements (13) connecting two successive annular elements (11),
said reinforcement (10) being **characterized in that** at least one of said bridge elements (13) has a substantially V-shaped profile.

2. The reinforcement (10) according to claim 1, **characterized in that** said substantially V-shaped profile is substantially arranged on a plane which is coplanar with the axes (x1, x2) of extension of the respective annular elements (11).

3. The reinforcement (10) according to claim 1, **characterized in that** said base element (12) has a zigzag longitudinal extension, with said bridge elements (13) arranged along a succession of individual segments in which each of said segments is progressively inclined with respect to a previous segment.

4. The reinforcement (10) according to claim 1, **characterized in that** all said bridge elements (13) have a substantially V-shaped profile.

5. The reinforcement (10) according to claim 1, **characterized in that** respective tubular elements (14) are inserted in said annular elements (11).
